Europäisches Patentamt

European Patent Office

Office européen des brevets

(11) Veröffentlichungsnummer: **0 201 670 B1**

# EUROPÄISCHE PATENTSCHRIFT

(45) Veröffentlichungstag der Patentschrift: **26.05.93**

(21) Anmeldenummer: **86102304.2**

(22) Anmeldetag: **22.02.86**

(51) Int. Cl.5: **F02M  27/02**, B01J 23/40,
B01J 23/74, B01J 23/89,
B01J 35/02

(54) **Einrichtung zur Aufbereitung von im wesentlichen aus Methanol bestehenden Flüssigkeiten.**

(30) Priorität: **08.05.85 DE 3516562**

(43) Veröffentlichungstag der Anmeldung:
**20.11.86 Patentblatt  86/47**

(45) Bekanntmachung des Hinweises auf die
Patenterteilung:
**26.05.93 Patentblatt  93/21**

(84) Benannte Vertragsstaaten:
**DE FR GB IT**

(56) Entgegenhaltungen:
**US-A- 3 914 090**
**US-A- 4 170 200**
**US-A- 4 499 863**

**PATENT ABSTRACTS OF JAPAN, Band 9, Nr.
271 (C-311)(1994), 29 Oktober 1985**

**PATENT ABSTRACTS OF JAPAN, Band 6, Nr.
180 (C-125)(1058), 14 September 1982**

**PATENT ABSTRACTS OF JAPAN, Band 8,
Nr.283(C-258)(1720), 25 Dezember 1984**

(73) Patentinhaber: **VOLKSWAGEN AKTIENGE-
SELLSCHAFT**

**W-3180 Wolfsburg(DE)**

Patentinhaber: **SÜD-CHEMIE AG
Lenbachplatz 6
W-8000 München 2(DE)**

(72) Erfinder: **König, Axel, Dr.
Galgenkamp 13
W-3180 Wolfsburg 21(DE)**
Erfinder: **Korbel, Kurt
Dresdener Ring 31
W-3180 Wolfsburg 1(DE)**
Erfinder: **Ellinger, Karl-Werner
Kurzer Weg 4
W-3171 Rötgesbüttel(DE)**
Erfinder: **Schneider, Michael, Dr.
Waldparkstrasse 54a
W-8012 Ottobrunn-Riemerling(DE)**
Erfinder: **Kochloefl, Karl, Dr.
Kreuzstrasse 2
W-8052 Moosburg(DE)**

PATENT ABSTRACTS OF JAPAN Band 5, Nr. 156 (C−74)(828), 6 Oktober 1981

PATENT ABSTRACTS OF JAPAN, Band 9, Nr. 254 (c−308)(1977), 11 Oktober 1985

PATENT ABSTRACTS OF JAPAN, Band 7, Nr. 252 (C−194)(1397), 9 November 1983

PATENT ABSTRACTS OF JAPAN, Band 8, Nr. 138 (C−231)(1575, 27 Juni 1984

PATENT ABSTRACTS OF JAPAN, Band 8, Nr. 212 (C−244)(1649), 27 September 1984

G.E. Voecks, S. Dawson and J. Houseman: Operation of a catalythic methanol decomposition reactor for vehicular use", Proc. IV, International Symposium on Alcohol Fuels Technology, Guarajá, 1980

Erfinder: **Bock, Ortwin**
**Im Wiesental 12**
**W− 8300 Landshut−Kumhausen(DE)**

(74) Vertreter: **Reitzner, Bruno, Dr.**
**Patentanwälte Dipl.−Ing. R. Splanemann Dr.**
**B. Reitzner Tal 13**
**W− 8000 München 2 (DE)**

**Beschreibung**

Die Erfindung betrifft eine Einrichtung zur Aufbereitung von im wesentlichen aus Methanol bestehenden Flüssigkeiten als Kraftstoffe für mobile oder stationäre Brennkraftkraftmaschinen bzw. als wasserstoffquelle für Brennstoffelemente, mit einer einen Edelmetall−Trägerkatalysator aufweisenden Reaktionskammer zur katalytischen Spaltung bzw. Dampfreformierung wenigstens eines Teils des Methanols bei erhöhten Temperaturen.

Die nachstehenden Ausführungen beziehen sich in erster Linie auf eine Einrichtung zur Kraftstoffaufbereitung, da die bevorzugte Anwendung der erfindungsgemäßen Einrichtung auf diesem Gebiet liegt.

Kraftstoffaufbereitungsanlagen, bei denen wenigstens ein Teil des z.B einer Brennkraftmaschine zur Arbeitsleistung zuführbaren, im flüssigen Zustand vorliegenden Kraftstoffes zunächst katalytisch unter reduzierenden oder partiell oxidierenden Bedingungen gespalten wird, sind bereits bekannt. Durch die Spaltung des flüssigen Kraftstoffes, vorzugsweise in gasförmiges Kohlenmonoxid und Wasserstoff, soll eine bessere und vor allem schadstoffärmere Verbrennung in der Brennkraftmaschine, insbesondere im Leerlauf und bei niedrigen Teillasten sowie beim Kaltstart und während der Warmlaufphase, erreicht werden.

Als besonders günstig hat sich dabei die Heranziehung von Methanol als Kraftstoff erwiesen. Zum einen läßt sich dieser Kraftstoff verhältnismäßig leicht und mit relativ niedrigen Kosten aus nahezu allen Kohlenstoff enthaltenden Primärenergiequellen herstellen; darüberhinaus ist die Methanol−Spaltreaktion ein endothermer Prozeß, bei dem die sonst verlorengehende Wärmeenergie der Abgase der Brennkraftmaschine wirkungsradsteigernd eingesetzt werden kann.

Schließlich enthalten die bei der Methanolspaltung erzeugten Reaktionsgase relativ viel Wasserstoff, der sehr gut verbrennt und selbst bei sehr mageren Kraftstoff−Luft−Verhältnissen zündet, was zu einer wünschenswerten Verbrauchsreduzierung der Brennkraftmaschine, vor allem in Teillastzuständen, beiträgt.

Die Methanolspaltung erfolgt nach der Gleichung

$$CH_3OH \rightleftharpoons CO + H_2 \qquad (1)$$

Die Reaktion (1) ist stark endotherm und kann bei Temperaturen über 200°C mit Hilfe von heterogenen Katalysatoren durchgeführt werden. Das erhaltene, als Synthesegas bezeichnete Gasgemisch enthält etwa 30 Vol.−% CO und 66 Vol.−% $H_2$.

Eine weitere technisch interessante Reaktion ist die Methanol−Dampfreformierung, die nach der Gleichung

$$CH_3OH + H_2O \rightleftharpoons CO_2 + 3H_2 \qquad (2)$$

abläuft. Diese endotherme Reaktion kann auch als eine Kombination der Methanolspaltungsreaktion (1) und der CO−Konvertierung gemäß der Gleichung

$$CO + H_2O \rightleftharpoons CO_2 + H_2 \qquad (3)$$

angesehen werden. Die Methanol−Dampfreformierung wird durch die gleichen Katalysatoren katalysiert wie die Methanolspaltreaktion.

Als Katalysatoren für diese Reaktionen wurden bisher wegen der niedrigen Reaktionstemperaturen und der hohen erreichbaren Umsetzungsgrade Nichtedelmetall−Katalysatoren auf der Basis von Kupfer und Chrom, gegebenenfalls auch mit Zusatz von Zink, verwendet. Ein entscheidender Nachteil dieser Katalysatoren besteht jedoch darin, daß sie thermisch nicht stabil sind und insbesondere unter teiloxidierenden Bedingungen, d.h. also bei Sauerstoffzugabe, nicht dauerhaft betrieben werden können. Andererseits soll insbesondere die Spaltreaktion nicht nur unter reduzierenden, sondern auch unter teiloxidierenden Bedingungen ablaufen, damit die Wärmebilanz der Reaktion, insbesondere im Hinblick auf einen autothermen Reaktionsablauf, gesteuert werden kann.

Vor allem wegen ihrer Fähigkeit, auch unter teiloxidierenden Bedingungen arbeiten zu können, wurde bereits versucht, Edelmetall−Katalysatoren für die Spaltung von Methanol zu verwenden, siehe z.B. G.E. Voecks et al.: Operation of a catalythic methanol decomposition reactor for vehicular use, Proc. IV, Int. symp. on alcohol fuels technology, Guarujá, 1980 or US−A−4170200. Diese Katalysatoren sind beispielsweise so aufgebaut, daß auf einem aus einem Keramikmaterial, wie z.B. Cordierit, gefertigten wabenartigen Trägerkörper mit einer Vielzahl von längs durchlaufenden Strömungskanälen eine im wesentlichen aus Aluminiumoxid ($Al_2O_3$) bestehenden Zwischenträgerschicht aufgebracht ist, die die eigentliche, aus Edelmetallen bestehende katalytisch aktive Beschichtung trägt.

Eine andere Möglichkeit der Katalysatorherstellung besteht darin, die Edelmetallschicht auf Keramik – formkörper aufzubringen, die ihrerseits entweder unmittelbar aus Aluminiumoxid ($Al_2O_3$) oder aus einem anderen, jedoch mit einer $Al_2O_3$ – Zwischenschicht versehenen Keramikmaterial bestehen.

Diese Edelmetall – Katalysatoren können bei geeigneter Auswahl und Zusammensetzung die Metha – nolspaltung auch unter teiloxidierenden Bedingungen bei relativ niedrigen Temperaturen und mit günstigen Umsetzungsgraden durchführen. Nachteilig ist jedoch die Bildung von Dimethyläther sowie von Ruß in einer nicht vernachlässigbaren Menge. Während Ruß die aktiven Zentren des Katalysatorträgers desaktiviert und in größeren Mengen sogar die Strömungskanäle des Katalysatorkörpers zusetzt, ist Dimethyläther wegen seiner niedrigen Klopffestigkeit zumindest in Kraftstoffen von Brennkraftmaschinen unerwünscht.

Die der Erfindung zugrundeliegende Aufgabe besteht daher darin, eine Einrichtung zur Aufbereitung von im wesentlichen aus Methanol bestehenden Flüssigkeiten der vorstehend definierten Gattung zu schaffen, bei der die katalytische Spaltung bzw. Dampfreformierung des Methanols mit einer niedrigen optimalen Umsetzungstemperatur, insbesondere bei teiloxidierenden Bedingungen, abläuft, bei der weiterhin das Entstehen von Dimethyläther und Ruß weitgehend vermieden und statt dessen ein möglichst hoher Umsatzgrad mit einer über den gesamten Betriebstemperaturbereich gleichbleibenden oder leicht steuer – baren Zusammensetzung der Spaltgase und mit einem hohen Anteil an Wasserstoff gewährleistet werden kann.

Diese Aufgabe wird erfindungsgemäß dadurch gelöst, daß der Katalysator aus

(A) einer Edelmetallkomponente aus einem oder mehreren Elementen der 8. Nebengruppe des Perio – densystems auf

(B) einem oxidischen Träger auf der Basis

($B_1$) von $TiO_2$ oder $CeO_2$, gegebenenfalls im Gemisch mit anderen feuerfesten Metalloxiden und/oder einem hydraulischen Binder, oder

($B_2$) von $TiO_2$ oder $CeO_2$, die als Zwischenschicht auf die Oberfläche eines vorgeformten feuerfesten Trägers aufgebracht sind,

zusammengesetzt ist.

Die Verwendung dieser Katalysatoren bewirkt, wie Versuche gezeigt haben, eine sehr günstige, weitgehend rußfreie Methanolspaltung bei Spalttemperaturen im Bereich von 300˚C, wobei das Reaktions – gas im wesentlichen Kohlenmonoxid und Wasserstoff, dagegen kaum Anteile an Dimethyläther enthält. Damit ist ein derartiger Katalysator besonders zum Einsatz bei einer Kraftstoffaufbereitungseinrichtung für Brennkraftmaschinen geeignet, in denen Methanol als Kraftstoff verwendet wird, und bei denen dieser in einer Reaktionskammer unter reduzierenden bzw. teiloxidierenden Bedingungen gespalten wird. Ferner kann mit Hilfe dieses Katalysators der Wasserstoffanteil des gasförmigen Reaktionsgemisches durch Zusatz von Wasser entsprechend der Gleichung (2) auf einfache Weise erhöht werden, was insbesondere bei Kaltstartbedingungen bzw. wenn eine billige Wasserstoffquelle für Brennstoffelemente gewünscht wird, von Vorteil ist. Im letzteren Fall kann das gebildete $CO_2$ in an sich bekannter Weise (z.B. durch Absorption in einem alkalischen Medium oder durch fraktionierte Kondensation) von dem Wasserstoff getrennt werden.

Die Edelmetallkomponente (A) des erfindungsgemäß verwendeten Katalysators stellt vorzugsweise Platin und/Rhodium und/oder Iridium, vorzugsweise Platin, dar, wobei auch Legierungen dieser Metalle vorliegen können.

Die Konzentration der Edelmetallkomponente (A) beträgt vorzugsweise 0,01 bis 3 Gew.%, insbesondere 0,05 bis 0,3 Gew.%, bezogen auf den gesamten Katalysator.

Zur Erhöhung der Festigkeit der Katalysatoren kann der oxidische Träger ($B_1$) bzw. die Zwischen – schicht ($B_2$), also das $TiO_2$ oder das $CeO_2$ bzw. ein Gemisch aus $TiO_2$ oder $CeO_2$, als andere feuerfeste Metalloxide $ZrO_2$ oder $La_2O_3$ in Konzentrationen von 1 bis 20 Gew. – %, vorzugsweise 1 bis 10 Gew. – %, insbesondere 5 bis 10 Gew. – %, enthalten. Zur Erhöhung der Festigkeit trägt ferner der hydraulische Binder, vorzugsweise Portland – oder Calciumaluminatzement bei, wobei die Konzentration des hydrauli – schen Binders im allgemeinen 5 bis 50 Gew.%, vorzugsweise 15 bis 25 Gew.%, bezogen auf den gesamten Katalysator, beträgt. Als vorgeformten feuerfesten Träger verwendet man vorzugsweise Cordierit, Mullit, Siliciumcarbid oder $\alpha - Al_2O_3$.

Der oxidische Träger nach der Variante ($B_1$) bzw. der vorgeformte feuerfeste Träger nach der Variante ($B_2$) können in Form von Ringen, Kugeln oder Wabenkörpern, Tabletten oder Strangpreßlingen vorliegen.
Die in den erfindungsgemäßen Einrichtungen verwendeten Katalysatoren können auf unterschiedliche Weise hergestellt werden.

Nach einer Variante wird der Katalysator durch Verpressen der Ausgangskomponenten für ($B_1$) ohne hydraulischen Binder mit einem Gleitmittel, insbesondere Aluminiumstearat und/oder Graphit, zu Formkör – pern, Calcinieren der Formkörper und Belegen der calcinierten Formkörper mit der Edelmetallkomponente (A) hergestellt. Nach einer anderen Variante wird der Katalysator durch Zusatz von Wasser und Gleitmitteln, wie Aluminiumstearat und/oder Graphit, zu den einen hydraulischen Binder enthaltenden Ausgangskomponenten für ($B_1$) Erzeugung von Formkörpern, Trocknen und Calcinieren der Formkörper und Belegen der calcinierten Formkörper mit der Edelmetallkomponente (A) hergestellt.

Nach einer weiteren Variante kann der Katalysator durch Aufbringen der Komponenten von ($B_2$), d.h. von $TiO_2$ und/oder $CeO_2$ in Form ihrer löslichen Salze auf die Oberfläche des vorgeformten feuerfesten Trägers, Calcinieren des so behandelten Trägers und Belegen des calcinierten Trägers mit der Edelmetallkomponente (A) hergestellt werden. In diesem Fall verwendet man vorzugsweise die wasser- oder methanollöslichen Salze der Komponenten von ($B_2$) in Form von Nitraten, Formiaten, Acetaten oder Oxalaten. Der vorgeformte feuerfeste Träger wird hierbei in die Salzlösung getaucht oder damit imprägniert.

Nach einer weiteren Variante kann der Katalysator durch Imprägnierung oder Tauchung des vorgeformten feuerfesten Trägers mit einer alkoholischen, insbesondere methanolischen Lösung eines Alkoxytitanats, Calcinieren des so behandelten Trägers und Belegen des calcinierten Trägers mit der Edelmetallkomponente (A) erhalten werden. Durch die Verwendung von Alkoxytitanaten, wie Tetraisopropyltitanat ($(CH_3)_2CHO)_4Ti$) oder Tetra-n-butyltitanat (($n-C_4H_8O)_4Ti$) kann die Haftfestigkeit des Titandioxids an den vorgeformten Formkörpern verbessert werden. Vor der Calcinierung werden die Alkoxytitanate vorzugsweise mit Dampf hydrolysiert.

Nach allen Herstellungsvarianten des Katalysators wird die Belegung des Trägers mit der Edelmetallkomponente üblicherweise unter Verwendung von wasserlöslichen Edelmetallsalzen, insbesondere von $H_2PtCl_6$ oder $(NH_4)_2PtCl_6$ oder den entsprechenden Pd- oder Rh-Salzen durchgeführt. Die so hergestellten Katalysatorvorläufer werden dann getrocknet und calciniert. Die Calcinierung erfolgt gewöhnlich bei 450 bis 650°C, insbesondere bei 550 bis 640°C.

Um aus den Edelmetallsalzen die entsprechenden Edelmetalle zu erhalten, können die calcinierten Katalysatorvorläufer mit Wasserstoff aktiviert werden, wobei die Aktivierung sofort nach der Calcinierung oder erst in der Reaktionskammer der Aufbereitungseinrichtung erfolgen kann.

Gegenstand der Erfindung ist ferner die Anwendung der erfindungsgemäßen Einrichtung zur katalytischen Spaltung bzw. Dampfreformierung von im wesentlichen aus Methanol bestehenden Flüssigkeiten bei autothermen Bedingungen unter Zusatz von Sauerstoff oder eines sauerstoffhaltigen Gases. Vorzugsweise wird dem Methanol etwas Wasser zugesetzt, wobei die Umsetzung des wasserhaltigen Methanols dann vorzugsweise im Temperaturbereich von 300 bis 600°C unter einem Druck von 0,1 bis 10 bar bei einer Raumgeschwindigkeit von 0,5 bis 20 Liter wasserhaltiges Methanol je Stunde und Liter Katalysator durchgeführt wird.

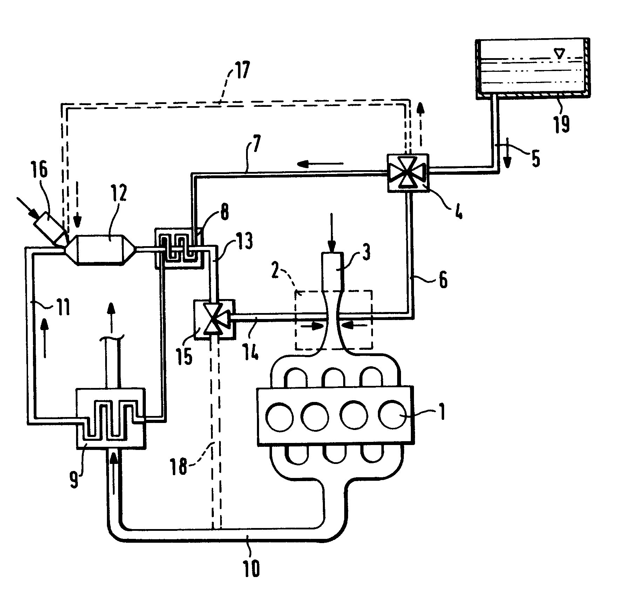

In der Zeichnung ist ein Ausführungsbeispiel eines Kraftstoffaufbereitungs- und Zuführsystems für eine Brennkraftmaschine für Kraftfahrzeuge gezeigt, bei der als Kraftstoff Methanol verwendet wird und dieses in einer Reaktionskammer gespalten wird.

In der Zeichnung ist mit 1 eine herkömmliche mehrzylindrige Brennkraftmaschine angegeben, die über eine Ansaugleitung 3 Luft aus der Umgebung ansaugt. 2 bezeichnet eine Kraftstoffzumeßeinrichtung in der je nach Betriebszustand der Brennkraftmaschine Kraftstoff in flüssiger and/oder gasförmiger Phase zugeführt wird. Zu diesem Zweck ist an die Kraftstoffzumeßeinrichtung 2 eine gasförmigen Kraftstoff zuführende Gasleitung 14 sowie eine flüssigen Kraftstoff zuführende Kraftstoffleitung 6 angeschlossen, wobei letztere von einem ersten Steuerventil 4 mit einer von einem Kraftstoffvorratsbehälter 19 kommenden Kraftstoffleitung 5 verbindbar ist. Der Kraftstoffvorratsbehälter 19 enthält flüssiges Methanol als Kraftstoff.

Eine zweite von dem Steuerventil 4 alternativ oder zusätzlich beaufschlagbare Kraftstoffleitung 7 ist über einen ersten Wärmetauscher 8 sowie einen zweiten Wärmetauscher 9 mit einer zu einer Reaktionskammer 12 führenden Kraftstoffleitung 11 verbunden, in der das als Kraftstoff verwendete Methanol im wesentlichen in Dampfform transportiert wird. In der Reaktionskammer 12 ist ein Katalysator vorhanden, der unter Einfluß erhöhter Temperaturen im Bereich von etwa 300°C eine Spaltung des Methanols unter reduzierenden oder teiloxidierenden Bedingungen bewirkt, so daß am Ausgang der Reaktionskammer 12 ein Reaktorgas vorliegt, das im wesentlichen CO und $H_2$, bei teiloxidierenden Bedingungen auch $CO_2$ und $H_2O$ enthält. Dieses Gas wird über eine Leitung 13 abgeführt und von einem zweiten Steuerventil 15 der zu der Kraftstoffzumeßeinrichtung 2 führenden Gasleitung 14 zugeleitet.

Mit 16 ist ein am Eingang der Reaktionskammer 12 vorgesehener Brenner bezeichnet, der Luft aus der Umgebung ansaugt und in die Reaktionskammer 12 zur Herstellung der teiloxidierenden Atmosphäre einleitet. Darüberhinaus erhält der Brenner 16 während des Startvorganges über eine Startleitung 17 von dem ersten Steuerventil 4 Kraftstoff, der während dieses Startvorganges zwecks Aufheizung der Reaktionskammer gezündet und verbrannt wird. Die während dieses Startvorganges in der Reaktionskammer erzeugten Verbrennungsgase werden durch entsprechende Schaltung des zweiten Stuerventils 15 über eine Leitung 18 unmittelbar in eine mit 10 bezeichnete Abgasleitung geleitet, die die Verbrennungsgase der Brennkraftmaschine 1 abführt.

Die für die Durchführung des endotherm ablaufenden Methanol−Spaltprozesses in der Reaktionskammer 12 erforderliche Reaktionswärme wird zum einen dadurch bereitgestellt, daß der diesem Spaltprozeß zugeführte Kraftstoff bei dem in der Zeichnung gezeigten Ausführungsbeispiel in zwei Wärmetauschern 8 und 9 aufgeheizt, verdampft und überhitzt wird und daß darüberhinaus in der Reaktionskammer 12 eine exotherme Teiloxydation des Kraftstoffes unter Heranziehung der über den Brenner 16 zugeführten Luft erfolgt. In dem von dem flüssigen Kraftstoff durchströmten ersten Wärmetauscher 8 wird dabei der flüssige Methanol erärmt und teilweise verdampft, während gleichzeitig das durch die Leitung 13 aus der Reaktionskammer 12 austretende Spaltgas gekühlt wird, so daß Füllungsverluste in der Brennkraftmaschine 1 durch erhöhte Gemischtemperaturen vermieden werden. In dem zweiten von den Abgasen der Brennkraftmaschine 1 beheizten Wärmetauscher 9 wird der restliche flüssige Methanol verdampft und der Dampf überhitzt, so daß der Kraftstoff der Reaktionskammer 12 dampfförmig und mit erhöhten Temperaturen zugeführt werden kann.

Um die Abgaswärme der durch die Abgasleitung 10 aus der Brennkraftmaschine 1 abgeführten Verbrennungsgase weiter auszunutzen, könnte auch daran gedacht werden, diese Gase durch einen die Reaktionskammer 12 umgebenden äußeren Mantel zu leiten und so die Reaktionskammer unmittelbar zu beheizen.

Je nach Betriebszustand der Brennkraftmaschine kann nun der von dieser über die Ansaugleitung 3 angesaugten Verbrennungsluft flüssiger Kraftstoff und/oder das aus der Reaktionskammer 12 herangeführte Spaltgas zugemischt werden. Dabei wird die von der Menge her begrenzte Spaltgaszuführung besonders in den Betriebszuständen vorherrschen, in denen üblicherweise hohe Schadstoffanteile erzeugt werden. Solche Betriebszustände sind insbesondere der Kaltstart und der Warmlauf der Brennkraftmaschine sowie Teillastbetriebszustände, in denen mit mageren Kraftstoff/Luft−Verhältnissen gearbeitet wird. Bei vollastnahen Betriebszuständen wird dagegen zunehmend flüssiger Kraftstoff eingesetzt, um die hohe gewünschte Leistung zu erreichen.

Um bei der in der Reaktionskammer 12 ablaufenden Methanolspaltung mit möglichst niedrigen Temperaturen in der Größenordnung von etwa 300°C arbeiten zu können und dabei das Methanol nach Möglichkeit vollständig in Kohlenmonoxid und Wasserstoff umzuwandeln sowie gleichzeitig die Bildung von Dimethyläther auszuschließen, wird in der Reaktionskammer 12 der erfindungsgemäße Katalysator verwendet.

Dieser Katalysator kann auch in einer im Prinzip ähnlich konstruierten Spalteinrichtung zur Herstellung von Wasserstoff entsprechend der Gleichung (2) verwendet werden, wobei der Wasserstoff dann nach Entfernung des $CO_2$ einer Brennstoffzelle zur direkten Umwandlung in elektrische Energie zugeführt wird.

Nachstehend sind einige Beispiele zur Herstellung der erfindungsgemäß verwendeten Katalysatoren angegeben.

Beispiel 1

Ein kommerzielles $TiO_2$ (BET Os = 45 m$^2$/g) wurde nach Zugabe von 8 Gew.% Al−Stearat zu 4,5 x 4,5 mm−Tabletten verpreßt und diese 8 Std. auf 640°C in Luft aufgeheizt, dann 1 Std. auf 640°C gehalten und anschließend wieder auf Umgebungstemperatur abgekühlt. Nach einer Imprägnierung mit einer wäßri−gen $H_2PtCl_6$−Lösung (bei 25°C) wurden die Pt−haltigen Tabletten getrocknet (120°C, 4 h) und bei 400°C (2 h) nachcalciniert. Der so erhaltene Katalysator (K−1) enthielt 0,3 Gew.% Pt, seine physikalisch−mechanischen Daten sind in Tabelle I zusammengestellt.

Beispiel 2

Ein kommerzielles $TiO_2$ (spez. Oberfläche Os nach BET = 45 m$^2$/g) wurde mit 25 % Calciumaluminatzement zunächst trocken, dann nach Zugabe von 60 % $H_2O$ (bezogen auf die eingesetzte Masse) feucht gemischt, kurz vor Ende des Mischvorganges wurden 3 % Elektrographit zugegeben. Die feuchte Masse wurde in dünner Schicht ausgelegt und luftgetrocknet, bis ein Trockenverlust (TV) bei 120°C von 8 bis 12 % erreicht war. Dann wurde die Masse zu zylindrischen Tabletten von 4,5 mm Durchmesser und 4,5 mm Höhe verpreßt. Die Tabletten wurden 4 Tage im geschlossenen Gefäß ausgelagert und anschließend im Dampfautoklaven bei 5,5 bar und 155°C 12 Std. dampfbehandelt. Danach wurde die Tabletten einen Tag offen ausgelagert und schließlich an Luft innerhalb von 3 Std. auf 640°C aufgeheizt und 1 Std. bei 640°C gehalten. Nach dem Abkühlen wurde mit einer wäßrigen $H_2PtCl_6$−Lösung imprägniert, die Pt−haltigen Tabletten bei 120°C (4 Std.) getrocknet und bei 400°C (2 Std.) recalciniert. Der so erhaltene Katalysator (K−2) enthielt 0,3 Gew.% Pt, seine physikalisch−mechanischen Daten sind in Tabelle I zusammengefaßt.

Beispiel 3

Ein kommerzielles $CeO_2$ (BET Os = 43 $m^2$/g) wurde nach Zugabe von 8 Gew.% Al − Stearat zu 4,5 x 4,5 mm Tabletten verpreßt und diese 8 Std. auf 640˚C in Luft aufgeheizt, dann 1 Std. auf 640˚C gehalten und anschließend wieder auf Umgebungstemperatur abgekühlt. Nach der Imprägnierung mit einer wäßrigen $H_2PtCl_6$ − Lösung (bei 25 ˚C) wurden die Pt − haltigen Tabletten getrocknet (120˚C, 4Std) und bei 400˚C (2Std) nachcalciniert. Der so erhaltene Katalysator (K − 3) enthielt 0,3 Gew.% Pt. Seine physikalisch − mechanischen Daten sind in Tabelle I zusammengestellt.

Beispiel 4

Ein kommerzieller Wabenkeramik − Körper mit quadratischen Öffnungen von 1,5 mm Seitenlänge wurde bei Raumtemperatur 30 min. in Tetraisopropyltitanat (TIPT) getaucht.

Danach wurde der Träger im Dampfautoklaven bei 5,5 bar und 155˚C 12 Std. zur Hydrolyse des TIPT dampfbehandelt. Anschließend wurde im Muffelofen bei 600˚C (2 Std)calciniert, der Wabenkeramik − Träger enthielt nach dieser Behandlung 6 Gew.% $TiO_2$.

Zur Pt − Imprägnierung wurde der $TiO_2$ − haltige Träger mit einer wäßrigen Lösung von $H_2PtCl_6$ getränkt, vorsichtig getrocknet und bei 400˚C (2 Std)recalciniert.

Der so erhaltene Kaltalysator (K − 4) enthielt 0,3 % Pt, seine physikalisch − mechanischen Daten sind in Tabelle I zusammengefaßt.

Beispiel 5

Ein kommerzieller $\gamma − Al_2O_3$ − Träger (Kugeln mit 2 − 6 mm Durchmesser, BET − Os = 200 $m^2$/g) wurde bei Raumtemperatur 15 min. in Tetraisopropyltitanat (TIPT) getaucht. Anschließend wurde zur Hydrolyse des TIPT im Dampfautoklaven bei 5,5 bar und 155˚C 12 Std. dampfbehandelt. Danach wurde bei 600˚C (2 Std) calciniert. Der Träger enthielt 2,6 Gew.% $TiO_2$.

Nach einer Impragnierung mit einer wäßrigen Läsung von $H_2PtCl_6$ wurden die Pt − haltigen Kugeln bei 120˚C (4Std) getrocknet und bei 400˚C (2 Std)recalciniert.

Der so erhaltene Katalysator (K − 5) enthielt 0,3 Gew.% Pt, seine physikalisch − mechanischen Daten sind in Tabelle I zusammengefaßt.

Beispiel 6

Ein kommerzielles $TiO_2$ (BET − Os = 45 $m^2$/g) wurde mit einem kommerziellen $La_2O_3$ (BET − Os = 25 $m^2$/g) (Gewichtsverhältnis 9: 1) in einem Kollergang etwa 30 min. gemischt. Nach der Zugabe von 8 Gew. % Al − Stearat wurde die Masse zu 4,5 x 4,5 mm Tabletten verpreßt und die hergestellten Tabletten 8 Std. auf 640˚C in Luft aufgeheizt, dann 1 Std. auf 640˚C gehalten und anschließend wieder auf Umgebungs − temperatur abgekühlt. Die Imprägnierung mit $H_2PtCl_6$ wäßriger Losung wurde analog dem Beispiel 1 durchgeführt.

Der so erhaltene Katalysator (K − 6) enthielt 0,3 Gew. % Pt, seine physikalisch − mechanischen Daten sind in Tabelle I zusammengestellt.

Beispiel 7

Ein kommerzielles $TiO_2$ (BET − Os = 45 $m^2$/g) wurde mit einem kommerziellen $La_2O_3$ (BET − Os = 25 $m^2$/g) (Gewichtsverhältnis 9:1) in einem Kollergang etwa 30 min. gemischt. Nach der Zugabe von 8 Gew.% Al − Stearat wurde die Masse zu 4,5 x 4,5 mm Tabletten verpreßt und die hergestellten Tabletten 8 Std. auf 640˚C in Luft aufgeheizt, dann 1 Std. auf 640˚C gehalten und anschließend wieder auf Umgebungstem − peratur abgekühlt.

Nach einer Imprägnierung mit einer wäßrigen $H_2PtCl_6$ − Lösung (bei 25˚C) wurden die Pt − haltigen Tabletten getrocknet (120˚C, 4h) und bei 400˚C (2h) nachcalciniert.

Der so erhaltene Katalysator (K − 7) enthielt 0,3 Gew. − % Pt; seine physikalisch − mechanischen Daten sind in Tabelle I zusammengestellt.

Beispiel 8

Die Arbeitsweise von Beispiel 7 wurde mit der Abweichung wiederholt, daß statt des $La_2CO_3$ die gleiche Menge $ZrO_2$ verwendet wurde. Die physikalisch−mechanischen Daten des so erhaltenen Katalysators (K−8) sind in Tabelle I zusammengestellt.

Die nach den Beispielen 1 und 2 erhaltenen Katalysatoren wurden zur Reduktion der Edelmetallkomponente über einen Zeitraum von 3 Stunden im Wasserstoffstrom auf 400˚C aufgeheizt. Nach der Abkühlung auf 300˚C wurde mit der Methanolspaltung in einem konventionellen Metallrohrreaktor begonnen. Das Methanol enthielt 2,2 Vol.−% $H_2O$. Die Methanolspaltung wurde mit einer Raumgeschwindigkeit von 2 Liter/Stunde und Liter Katalysator bei 300, 350 und 400˚C durchgeführt.

Die nach den Beispielen 1 bis 8 erhaltenen Katalysatoren wurden zur Reduktion der Edelmetallkomponente über einen Zeitraum von 3 Std. im Wasserstoffstrom auf 400˚C aufgeheizt. Nach der Abkühlung auf 300˚C wurde mit diesen Katalysatoren eine Methanolspaltung in einem Testreaktor durchgeführt, wobei die Bedingungen im Testreaktor einer weitgehend isothermen Spaltung entsprachen. Bei dieser Methanolspaltung wurde mit einer Raumgeschwindigkeit von 2 Liter/Stunde und Liter Katalysator bei 300, 350 und 400˚C gearbeitet. Das durch die katalytische Spaltung entwickelte Gas wurde mit Hilfe einer Gasuhr gemessen und gaschromatgraphisch analysiert. Die Ergebnisse sind in Tabelle II zusammengefaßt.

In weiteren Versuchen wurde eine Methanolspaltung unter weitgehend autothermen Bedingungen durchgeführt, die im wesentlichen den Bedingungen in der Reaktionskammer 12 der in der Zeichnung dargestellten Kraftstoffaufbereitungseinrichtung entsprachen. Hierbei wurden mit den Katalysatoren K1 bzw. K5 in 2 Versuchen als typische Gaszusammensetzungen die in Tabelle III angegebenen Konzentrationen in Vol % ermittelt. Die Raumgeschwindigkeiten lagen bei diesen Versuchen zwischen 3 Liter/Stunde und Liter Katalysator und 6 Liter/Stunde und Liter Katalysator. Die Temperaturen in Reaktor nahmen Werte zwischen 220˚C und 400˚C an.

Tabelle I

Physikalisch-Mechanische Daten der hergestellten Katalysatoren

| Kat.Nr. | Format | BET-Os $(m^2/g)$ | SG $(g/l)$ | SDF $(kg)$ | PV $(ml/g)$ | Zusammensetzung[+) (Gew.-%) |
|---|---|---|---|---|---|---|
| K-1 | 4.5x4.5mm Tabl. | 40 | 1326 | 17.3 | 0.13 | $TiO_2$ |
| K-2 | 4.5x4.5mm Tabl. | 15 | 1131 | 39.0 | 0.22 | $TiO_2(75)$ Ca-Al-Zement |
| K-3 | 4.5x4.5mm Tabl. | 47 | 1850 | 12.5 | 0.12 | $CeO_2$ |
| K-4 | Wabenkeramik | 8 | 358 | -- | 0.14 | $TiO_2(6.1)$,Cordierit |
| K-5 | 2-5 mm Kugeln | 125 | 628 | 10.0 | 0.50 | $TiO_2(2.6)$, $Al_2O_3$ |
| K-6 | 4.5x4.5mm Tabl. | 35 | 1350 | 16.0 | 0.12 | $TiO_2(88)$, $La_2O_3(10)$ |
| K-7 | 4.5x4.5mm Tabl. | 35 | 1350 | 16.0 | 0.12 | $TiO_2(88)$, $La_2O_3(10)$ |
| K-8 | 4.5x4.5mm Tabl. | 37 | 1400 | 16.0 | 0.13 | $TiO_2(88)$, $ZrO_2(10)$ |

Anmerkungen

BET-OS - spez. Oberfläche nach BET

SG — Schüttgewicht

SDF — Seitendruckfestigkeit

PV — Porenvolumen

+) alle hergestellten Katalysatoren enthalten 0,3 Gew.-% Pt

EP 0 201 670 B1

Tabelle II

| Kat. Nr. | T °C | Gasmenge 1/h (25°C) | Gaszusammensetzung (Vol %) | | | | Methanolumsatz (%) |
|---|---|---|---|---|---|---|---|
| | | | CO | $H_2$ | $CO_2$ | $CH_4$ | |
| K-1 | 300 | 85 | 26.7 | 66.4 | 4.4 | .2.5 | 46.9 |
| | 350 | 156 | 28.6 | 65.4 | 3.5 | 2.5 | 86.1 |
| | 400 | 181 | 28.5 | 65.1 | 3.4 | 3.0 | 99.9 |
| K-2 | 300 | 46 | 29.9 | 66.2 | 2.9 | 1.0 | 25.4 |
| | 350 | 95 | 30.0 | 66.6 | 2.4 | 1.0 | 52.4 |
| | 400 | 150 | 30.0 | 66.8 | 2.1 | 1.1 | 82.8 |
| K-3 | 300 | 64 | 25.6 | 71.0 | 3.0 | 0.4 | 35.3 |
| | 350 | 137 | 28.4 | 68.2 | 3.0 | 0.4 | 75.6 |
| | 400 | 181 | 29.1 | 67.8 | 2.6 | 0.5 | 99.9 |
| K-4 | 300 | 33 | 33.0 | 65.3 | 0.6 | 1.1 | 18.2 |
| | 350 | 73 | 32.9 | 65.2 | 0.6 | 1.3 | 40.3 |
| | 400 | 120 | 32.7 | 65.1 | 0.7 | 1.5 | 66.2 |
| K-5 | 300 | 46 | 26.1 | 72.2 | 0.6 | 1.1 | 25.4 |
| | 350 | 92 | 27.3 | 70.6 | 0.9 | 1.2 | 50.8 |
| | 400 | 133 | 29.3 | 68.1 | 1.0 | 1.6 | 73.4 |
| K-6 | 300 | 74 | 26.1 | 68.8 | 3.7 | 1.4 | 40.8 |
| | 350 | 146 | 28.5 | 67.1 | 3.0 | 1.4 | 80.6 |
| | 400 | 180 | 28.8 | 66.5 | 3.0 | 1.7 | 99.3 |
| K-7 | 300 | 74 | 26.1 | 68.8 | 3.7 | 1.4 | 40.8 |
| | 350 | 146 | 28.5 | 67.1 | 3.0 | 1.4 | 80.6 |
| | 400 | 180 | 28.8 | 66.5 | 3.0 | 1.7 | 99.3 |
| K-8 | 300 | 74 | 25.8 | 68.0 | 3.6 | 2.6 | 40.0 |
| | 350 | 146 | 28.3 | 66.5 | 3.1 | 2.1 | 79.5 |
| | 400 | 180 | 28.6 | 66.1 | 2.9 | 2.4 | 98.7 |

Einsatz: Methanol mit 2.2 Vol.-%, $H_2O$

EP 0 201 670 B1

EP 0 201 670 B1

Tabelle III

| | Gaszusammensetzung [Vol%] | | | | | Methanol |
|---|---|---|---|---|---|---|
| | CO | $H_2$ | $Co_2$ | $CH_4$ | $N_2$ | |
| Versuch 1 | 20.0 | 47,0 | 3,2 | 1,4 | 3,4 | 25,0 |
| Versuch 2 | 22,0 | 48,0 | 3,7 | 1,4 | 4,3 | 21,0 |

**Patentansprüche**

1. Methanolaufbereitungseinrichtung zur Aufbereitung von im wesentlichen aus Methanol bestehenden Flüssigkeiten als Kraftstoff für mobile oder stationäre Brennkraftmaschinen bzw. als Wasserstoffquelle für Brennstoffelemente, mit einer Reaktionskammer in der sich ein Edelmetall – Trägerkatalysator befindet, und in welcher wenigstens ein Teil des Methanols bei erhöhten Temperaturen katalytisch gespalten bzw. dampfreformiert wird, wobei der Katalysator aus einer Edelmetallkomponente (A) aus einem oder mehreren Elementen der 8. Nebengruppe des Periodensystems auf einem oxidischen Träger zusammengesetzt ist, dadurch gekennzeichnet, daß der Träger auf der Basis
   (B1) von $TiO_2$ oder $CeO_2$, gegebenenfalls im Gemisch mit anderen feuerfesten Metalloxiden und/oder einem hydraulischen Binder, oder
   (B2) von $TiO_2$ oder $CeO_2$, die als Zwischenschicht auf die Oberfläche eines vorgeformten feuerfe – sten Trägers aufgebracht sind,
   ausgeführt ist.

2. Einrichtung nach Anspruch 1, dadurch gekennzeichnet, daß die Edelmetallkomponente (A) Platin und/oder Rhodium und/oder Iridium, vorzugsweise Platin, darstellt.

3. Einrichtung nach Anspruch 1 oder 2, dadurch gekennzeichnet, daß die Konzentration der Edelmetall – komponente (A) 0,01 bis 3 Gew.%, insbesondere 0,05 bis 0,3 Gew.%, bezogen auf den gesamten Katalysator, beträgt.

4. Einrichtung nach einem der Ansprüche 1 bis 3, dadurch gekennzeichnet, daß der oxidische Träger ($B_1$) bzw. die Zwischenschicht ($B_2$) als andere feuerfeste Metalloxide $ZrO_2$ oder $La_2O_3$ in Konzentrationen von 1 bis 20 Gew.%, vorzugsweise von 1 bis 10 Gew. – %, insbesondere von 5 bis 10 Gew. – %, enthäl

5. Einrichtung nach einem der Ansprüche 1 bis 4, dadurch gekennzeichnet, daß der hydraulische Binder Portland – oder Calciumaluminatzement ist, wobei die Konzentration des Binders 5 bis 50 Gew.%, vorzugsweise 15 bis 25 Gew.%, bezogen auf den gesamten Katalysator, beträgt.

6. Einrichtung nach einem der Ansprüche 1 bis 5, dadurch gekennzeichnet, daß der vorgeformte feuerfeste Träger Cordierit, Mullit, Siliciumcarbid oder $\alpha – Al_2O_3$ ist.

7. Einrichtung nach einem der Ansprüche 1 bis 6, dadurch gekennzeichnet, daß der oxidische Träger ($B_1$) bzw. der vorgeformte feuerfeste Träger ($B_2$) in Form von Ringen, Kugeln, Wabenkörpern, Tabletten oder Strangpreßlingen, vorliegt.

8. Einrichtung nach einem der Ansprüche 1 bis 4 und 7, dadurch gekennzeichnet, daß der Katalysator durch Verpressen der Ausgangskomponenten für ($B_1$) ohne hydraulischen Binder mit einem Gleitmittel, insbesondere Aluminiumstearat und/oder Graphit, zu Formkörpern; Calcinieren der Formkörper und Belegen der calcinierten Formkörper mit der Edelmetallkomponente (A) erhalten worden ist.

9. Einrichtung nach einem der Ansprüche 1 bis 5 und 7, dadurch gekennzeichnet, daß der Katalysator durch Zusatz von Wasser und Gleitmitteln zu den einen hydraulischen Binder enthaltenden Ausgangs – komponenten für ($B_1$); Erzeugung von Formkörpern; Trocknen und Calcinieren der Formkörper und Belegen der calcinierten Formkörper mit der Edelmetallkomponente (A) erhalten worden ist.

11

**10.** Einrichtung nach einem der Ansprüche 1 bis 4, 6 und 7, dadurch gekennzeichnet, daß der Katalysator durch Aufbringen der Komponenten von ($B_2$) in Form ihrer löslichen Salze auf die Oberfläche des vorgeformten feuerfesten Trägers; Calcinieren des so behandelten Trägers und Belegen des calcinierten Trägers mit der Edelmetallkomponente (A) erhalten worden ist.

**11.** Einrichtung nach Anspruch 10, gekennzeichnet durch die Verwendung von wasser − oder methanol − löslichen Salzen der Komponenten von ($B_2$) in Form von Nitraten, Formiaten, Acetaten oder Oxalaten.

**12.** Einrichtung nach einem der Ansprüche 1 bis 4, 6 und 7, dadurch gekennzeichnet, daß der Katalysator durch Imprägnierung oder Tauchung des vorgeformten feuerfesten Trägers mit einer alkoholischen, insbesondere methanolischen Lösung eines Alkoxytitanats, Calcinieren des so behandelten Trägers und Belegen des calcinierten Trägers mit der Edelmetallkomponente (A) erhalten worden ist.

**13.** Einrichtung nach einem der Ansprüche 1 bis 12, dadurch gekennzeichnet, daß der Katalysator nach dem Belegen mit der Edelmetallkomponente (A) bei 450 bis 650°C, insbesondere bei 550 bis 600°C, calciniert worden ist.

**14.** Anwendung der Einrichtung nach einem der Ansprüche 1 bis 13 zur katalytischen Spaltung bzw. Dampfreformierung von im wesentlichen aus Methanol bestehenden Flüssigkeiten bei autothermen Bedingungen unter Zusatz von Sauerstoff oder von sauerstoffhaltigen Gasen.

**15.** Anwendung nach Anspruch 14, dadurch gekennzeichnet, daß die Umsetzung von wasserhaltigem Methanol im Temperaturbereich von 300 bis 600°C unter einem Druck von 0,1 bis 10 bar bei einer Raumgeschwindigkeit von 0,5 bis 20 Liter wasserhaltiges Methanol je Stunde und Liter Katalysator durchgeführt wird.

## Claims

**1.** A methanol processing device for the processing of liquids consisting substantially of methanol as a fuel for mobile or stationary internal − combustion engines or as hydrogen source for fuel cells, having a reaction chamber in which a noble − metal carrier catalyst is disposed and in which at least one portion of the methanol is decomposed catalytically or steam reformed at a high temperature,, wherein the catalyst is composed of a noble metal component (A) of one or more elements of sub − group VIII of the periodic system on an oxidic carrier, characterised in that the carrier is based on
(B1) $TiO_2$ or $CeO_2$, optionally mixed with other refractory metal oxides and/or a hydraulic binder, or
(B2) $TiO_2$ or $CeO_2$, which are applied as an intermediate layer to the surface of a preformed refractory carrier.

**2.** A device according to Claim 1, characterised in that the noble metal component (A) is platinum and/or rhodium and/or iridium, preferably platinum.

**3.** A device according to Claim 1 or 2, characterised in that the concentration of the noble metal component (A) is 0.01 to 3 % by weight, preferably 0.05 to 0.3 % by weight, in relation to the total catalyst.

**4.** A device according to any one of Claims 1 to , characterised in that the oxidic carrier ($B_1$) or the intermediate layer ($B_2$) contains the other refractory metal oxides $ZrO_2$ or $La_2O_3$ in concentrations of from 1 to 20 % by weight, preferably from 1 to 10 % by weight, in particular from 5 to 10 % by weight.

**5.** A device according to any one of Claims 1 to 4, characterised in that the hydraulic binder is Portland cement or calcium aluminate cement, the concentration of the binder being 5 to 50 % by weight, preferably 15 to 25 % by weight, in relation to the total catalyst.

**6.** A device according to any one of Claims 1 to 5, characterised in that the preformed refractory carrier is cordierite, mullite, silicon carbide or $\alpha − Al_2O_3$.

**7.** A device according to any one of Claims 1 to 6, characterised in that the oxidic carrier ($B_1$) or the preformed refractory carrier ($B_2$) is present in the form of rings, spheres, honeycomb bodies, tablets or extrusions.

8. A device according to any one of Claims 1 to 4 and Claim 7, characterised in that the catalyst is prepared by pressing the starting components for $(B_1)$ without hydraulic binder with a lubricant, in particular aluminium stearate and/or graphite, to form moulded bodies, calcining the moulded bodies and coating the calcined moulded bodies with the noble metal component (A).

9. A device according to any one of Claims 1 to 5 and Claim 7, characterised in that the catalyst is prepared by the addition of water and lubricants to the starting components for $(B_1)$ containing a hydraulic binder, producing moulded bodies, drying and calcining the moulded bodies and coating the calcined moulded bodies with the noble metal component (A).

10. A device according to any one of Claims 1 to 4, and Claims 6 and 7, characterised in that the catalyst is prepared by applying the components of $(B_2)$ in the form of their soluble salts to the surface of the preformed refractory carrier, calcining the carrier treated in this manner and coating the calcined carrier with the noble metal component (A).

11. A device according to Claim 10, characterised by the use of water – soluble or methanol – soluble salts of the components of $(B_2)$ in the form of nitrates, formates, acetates or oxalates.

12. A device according to any one of Claims 1 to 4, and Claims 6 and 7, characterised in that the catalyst is prepared by impregnating or dipping the preformed refractory carrier with or in an alcoholic, particularly a methanolic solution of an alkoxy titanate, calcining the carrier treated in this manner and coating the calcined carrier with the noble metal component (A).

13. A device according to any one of Claims 1 to 12, characterised in that, after the coating with the noble metal component (A), the catalyst is calcined at 450 to 650°C, in particular at 550 to 600°C.

14. Use of the device according to any one of Claims 1 to 13 for the catalytic decomposition or steam reforming of liquids consisting substantially of methanol under autothermic conditions with the addition of oxygen or of gases containing oxygen.

15. Use according to Claim 14, characterised in that the conversion of hydrous methanol is carried out in a temperature range of from 300 to 600°C at a pressure of from 0.1 to 10 bar at a spatial velocity of 0.5 to 20 litres of hydrous methanol per hour and per litre of catalyst.

**Revendications**

1. Installation de traitement du méthanol pour le traitement de liquides se composant essentiellement de méthanol, en tant carburant pour moteurs à combustion interne, mobiles ou stationnaires, ou en tant que source d'hydrogène pour piles à combustible, comportant une chambre de réaction dans laquelle se trouve un catalyseur supporté, à base de métal noble, et dans laquelle au moins une partie du méthanol est soumis à un craquage catalytique ou à un reformage catalytique à la vapeur, à des températures élevées, le catalyseur étant composé d'un composant (A) à base de métal noble, comprenant un ou plusieurs éléments du sous – groupe 8 de la Classification Périodique, sur un support de type oxyde, caractérisée par le fait que le support est réalisé à base de :
   $(B_1)$     $TiO_2$ ou $CeO_2$, le cas échéant en mélange avec d'autres oxydes métalliques réfractaires et/ou un liant hydraulique ; ou
   $(B_2)$     $TiO_2$ ou $CeO_2$, qui sont appliqués en tant que couche intermédiaire sur la surface d'un support réfractaire préformé.

2. Installation selon la revendication 1, caractérisée par le fait que le composant (A) à base de métal noble est constitué par du platine et/ou du rhodium et/ou de l'iridium, de préférence, par du platine.

3. Installation selon l'une des revendications 1 ou 2, caractérisée par le fait que la concentration du composant (A) à base de métal noble s'élève à une valeur de 0,01 à 3% en poids, en particulier, de 0,05 à 0,3% en poids, par rapport à la totalité du catalyseur.

13

4. Installation selon l'une des revendications 1 à 3, caractérisée par le fait que le support $(B_1)$ de type oxyde ou la couche intermédiaire $(B_2)$ contient, comme autres oxydes métalliques réfractaires, $ZrO_2$ ou $La_2O_3$ dans des concentrations de 1 à 20% en poids, de préférence de 1 à 10% en poids, en particulier, de 5 à 10% en poids.

5. Installation selon l'une des revendications 1 à 4, caractérisée par le fait que le liant hydraulique est du ciment Portland ou du ciment d'aluminate de calcium, la concentration du liant s'élevant à une valeur de 5 à 50% en poids, de préférence, de 15 à 25% en poids, par rapport à la totalité du catalyseur.

6. Installation selon l'une des revendications 1 à 5, caractérisée par le fait que le support réfractaire préformé est de la cordiérite, de la mullite, du carbure de silicium ou $\alpha - Al_2O_3$.

7. Installation selon l'une des revendications 1 à 6, caractérisée par le fait que le support de type oxyde $(B_1)$ ou le support réfractaire préformé $(B_2)$ se présente sous la forme d'anneaux, de billes, de corps à nids d'abeilles, de pastilles ou de corps pressés par boudinage.

8. Installation selon l'une des revendications 1 à 4 et 7, caractérisée par le fait que le catalyseur a été obtenu par compression des composants de départ pour $(B_1)$ sans liant hydraulique, avec un agent lubrifiant, en particulier du stéarate d'aluminium et/ou du graphite, pour former des corps façonnés ; calcination des corps façonnés et revêtement des corps façonnés calcinés par le composant (A) à base de métal noble.

9. Installation selon l'une des revendications 1 à 5 et 7, caractérisée par le fait que le catalyseur a été obtenu par addition d'eau et d'agents lubrifiants aux composants de départ pour $(B_1)$, contenant un liant hydraulique ; obtention de corps façonnés ; séchage et calcination des corps façonnés, et revêtement des corps façonnés calcinés par le composant (A) à base de métal noble.

10. Installation selon l'une des revendications 1 à 4, 6 et 7, caractérisée par le fait que le catalyseur a été obtenu par application des composants de $(B_2)$ sous la forme de leurs sels solubles, sur la surface du support réfractaire préformé ; calcination du support ainsi traité, et revêtement du support calciné par le composant (A) à base de métal noble.

11. Installation selon la revendication 10, caractérisée par l'utilisation de sels solubles dans l'eau ou dans le méthanol des composants de $(B_2)$, se présentant sous la forme de nitrates, de formiates, d'acétates ou d'oxalates.

12. Installation selon l'une des revendications 1 à 4, 6 et 7, caractérisée par le fait que le catalyseur a été obtenu par imprégnation ou trempage du support réfractaire préformé par ou dans une solution alcoolique, en particulier, méthanolique, d'un alcoxy titanate, calcination du support ainsi traité, et revêtement du support calciné par le composant (A) à base de métal noble.

13. Installation selon l'une des revendications 1 à 12, caractérisée par le fait que le catalyseur a été calciné, après le revêtement par le composant (A) à base de métal noble, à une température de 450 à 650°C, en particulier, à une température de 550 à 600°C.

14. Utilisation de l'installation telle que définie à l'une des revendications 1 à 13 pour le craquage catalytique ou le reformage catalytique à la vapeur de liquides se composant essentiellement de méthanol, dans des conditions autothermes, sous addition d'oxygène ou de gaz contenant de l'oxygène.

15. Utilisation selon la revendication 14, caractérisée par le fait que la réaction du méthanol contenant de l'eau dans la plage de température de 300 à 600°C est conduite sous une pression de 0,1 à 10 bar pour une vitesse spatiale de 0,5 à 20 litres de méthanol contenant de l'eau par heure et par litre de catalyseur.